## Europäisches Patentamt

## European Patent Office

## Office européen des brevets

(11) Veröffentlichungsnummer: **0 103 105**
**B1**

(12) **EUROPÄISCHE PATENTSCHRIFT**

(45) Veröffentlichungstag der Patentschrift:
**14.10.87**

(21) Anmeldenummer: **83106878.8**

(22) Anmeldetag: **13.07.83**

(51) Int. Cl.⁴: **A 62 C 37/06,** F 16 K 1/20,
F 16 K 31/44

(54) **Trockenalarmventil/Sprühflutventil für Feuerlöschanlagen.**

(30) Priorität: **13.08.82 DE 3230086**

(43) Veröffentlichungstag der Anmeldung:
**21.03.84 Patentblatt 84/12**

(45) Bekanntmachung des Hinweises auf die Patenterteilung:
**14.10.87 Patentblatt 87/42**

(84) Benannte Vertragsstaaten:
**AT BE CH DE FR GB IT LI LU NL SE**

(56) Entgegenhaltungen:
**DE-B-1 929 555**
**DE-C-815 879**
**FR-A-1 485 563**
**US-A-1 913 027**
**US-A-2 086 438**
**US-A-2 667 934**

(73) Patentinhaber: **Klein, Wilfried, Lindlarerstrasse 79,
D-5063 Overath- Immekeppel (DE)**

(72) Erfinder: **Klein, Wilfried, Lindlarerstrasse 79, D-5063
Overath- Immekeppel (DE)**

(74) Vertreter: **Eggert, Hans- Gunther, Dr.,
Räderscheidtstrasse 1, D-5000 Köln 41 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Trockenalarmventil/Sprühflutventil für ortsfest angeordnete Feuerlöschanlagen, insbesondere Sprinkleranlagen, mit einem Absperrelement, das in einem Ventilgehäuse mit Ein- und Auslass beweglich geführt ist und in Schließstellung zusammen mit dem Gehäuse bzw. einem im Gehäuse fest angeordneten Sitzring den lichten Querschnitt des Gehäuses dicht verschließt. ·

Zur Verhinderung von Brandschäden in großen Gebäuden wie Warenhäusern, Industrieanlagen, insbesondere Lagerhallen, Parkhäusern und dergleichen ist es bekannt, stationäre Feuerlöschanlagen, insbesondere Sprinkleranlagen zu installieren, wobei diese als Nass- oder auch als Trockensystem ausgebildet sein können. Da bei dem Naßsystem die zu den Sprinklern führenden Rohrleitungen ständig mit Wasser gefüllt sind, kann dieses nur in nicht frostgefährdeten Räumen angewendet werden. In frostgefährdeten Räumen verwendet man daher das Trockensystem, bei welchem der von einer Löschmittelquelle bis zu einem sogenannten Trockenalarmventil führende Teil der Rohrleitungen mit Wasser bei einem Druck bis zu 10 bar, der vom Trockenalarmventil aus in die frostgefährdeten Räume führende Teil der Rohrleitungen dagegen mit Druckluft von zum Beispiel 3,5 bar gefüllt ist. Beim Öffnen eines oder mehrerer Sprinkler kann nach Entweichen der Druckluft das Wasser unter gleichzeitigem Öffnen des Ventils Alarm auslösen und in den druckluftgefüllten Rohrleitungsteil strömen und über die Sprinkler dann den Brand bekämpfen.

Trockenalarmventile sind im wesentlichen in zwei verschiedenen Ausführungsarten bekannt, nämlich als Differentialtyp und als mechanischer Typ. Während der Differentialtyp eine Luftabsperrklappe erfordert, deren flächige Erstreckung erheblich größer ist als der lichte Querschnitt des Wasserweges und sich daraus große Abmessungen für das Ventilgehäuse ergeben, hat der mechanische Typ den wesentlichen Nachteil erheblicher Kompliziertheit und großer Schwierigkeiten, ihn in gutem Funktionszustand zu halten.

Aus der US-A 2 667 934 ist ein Trockenalarmventil/Sprühflutventil für ortsfest angeordnete Feuerlöschanlagen, insbesondere Sprinkleranlagen mit in einem Ventilgehäuse mit Einlass und Auslass angeordnetem, in Schließstellung den lichten Querschnitt des Gehäuses dicht verschließendem klappenförmigem Absperrelement mit in dieses integrierter Verriegelungs- und Auslöseeinrichtung bekannt. Bei diesem Trockenalarmventil greift ein am inneren Umfang des Ventilgehäuses angeordneter Vorsprung in eine Nut des Verriegelungselementes ein, wobei sich dieses in Verriegelungsstellung hält, so lange der auf seine auslasseitige Fläche wirkende Luftdruck den auf seine einlasseitige Fläche wirkenden Wasserdruck völlig kompensiert, und wobei sich dieses öffnet, sobald ein Ungleichgewicht der Druckverhältnisse eintritt, d.h. wenn der Wasserdruck bzw. die von ihm auf das Verriegelungselement ausgeübte Kraft den Luftdruck bzw. die von diesem auf das Verriegelungselement ausgeübte Kraft übersteigt. Dabei ist es unerheblich, ob das Ungleichgewicht der Druckverhältnisse durch ein Absinken des Luftdruckes und/ oder durch ein Ansteigen des Wasserdruckes eintritt.

Dieses Ventil weist somit alle Merkmle im ersten Teil des Anspruchs 1 auf.

Das hat aber den Nachteil, daß im Falle von evtl. sogenannten Wasserschlägen, bei denen der Wasserdruck kurzzeitig ein Vielfaches des normalen Wasserdruckes betragen kann, das Verriegelungselement öffnet, dieses Trockenalarmventil gegen solche Wasserschläge und damit gegen ein ungewolltes Öffnen zur unrichtigen Zeit also keine Sicherheit bietet.

Aufgabe der Erfindung ist es, diese Nachteile zu beheben und insbesondere ein Trockenalarmventil zu schaffen, welches es gestattet, das gleiche Gehäuse wie für ein entsprechendes Naßventil zu verwenden.

Nach dem Vorschlag der Erfindung wird dies bei einem Trockenalarmsystem gemäß der im Oberbegriff des Anspruchs 1 angegebenen Art dadurch erreicht, daß wenigstens ein in eine am inneren Umfang des Sitzes des Absperrelementes im Gehäuse oder in einem in dieses eingesetzten Sitzring (1) ausgebildete Bohrung, Nut oder dergleichen eingreifendes Verriegelungselement das Absperrelement gegen den auf dieses wirkenden maximal möglichen Druck einer durch Flüssigkeit, vorzugsweise Wasser, mechanisch in seiner Schließstellung verriegelt, solange ein mittelbar oder unmittelbar auf das Verriegelungselement wirkender Druck eines Gases oder Gasgemisches, insbesondere Luft, einen vorgegebenen Wert nicht unterschreitet, wobei der Schließdruck des Gases bzw. Gasgemisches geringer, vorzugsweise erheblich geringer ist, als der Druck der Löschflüssigkeit.

Durch die erfindungsgemäße Ausbildung des Trockenalarmventils/Sprühflutventils, bei dem alle für seine Funktion wichtigen und erforderlichen Teile im Absperrelement untergebracht sind, ist es möglich, trotz eines Druckes der Löschflüssigkeit, der erheblich größer ist als der Druck des Gases bzw. Gasgemisches, mit einem Absperrelement auszukommen, deren flächige Erstreckung nicht größer ist als diejenige des Absperrelements eines, entsprechenden Naßalarmventils, und das entsprechend in ein normales Naßalarmventilgehäuse eingebaut werden kann. Naßalarmventile, Trockenalarmventile und auch Sprühflutventile können also mit dem gleichen raumsparenden Gehäuse ausgestattet sein, für den einzelnen Fall der Anwendung ist lediglich ein dafür spezifisches Absperrelement in das Gehäuse einzubauen.

In zweckmäßiger Ausbildung der Erfindung ist vorgesehen, daß das Absperrelement zwei miteinander starr verbundene scheibenförmige Elemente aufweist, von denen in Schließstellung des Absperrelements das als Luftklappe dienende eine Element die dem Auslaß zugewandte Stirnfläche des Sitzes des Absperrelementes im Gehäuse oder des in dieses eingesetzten Sitzrings längs dessen gesamten Umfangs zumindest teilweise übergreift, das als Wasserteller dienende andere Element sich innerhalb des Gehäuses bzw. Sitzrings und auf der dem Auslaß zugewandten Seite der Luftklappe befindet, und dessen lichten Querschnitt im wesentlichen völlig überspannt.

Weiterhin ist vorgesehen, die Luftklappe und den Wasserteller mittels einer zentralen Schraube, Niet oder dergleichen miteinander zu verbinden und den Wasserteller an seiner luftklappenseitigen Stirnfläche mit einem zentralen, vorzugsweise zylindrischen Vorsprung zu versehen und in dem dadurch zwischen den benachbarten Flächen der Luftklappe und des Wassertellers gebildeten Ringraum einen Dichtungsring anzuordnen, der die luftklappenseitige Stirnfläche des Gehäuses bzw. Sitzrings längs des gesamten Umfangs zumindest teilweise übergreift und damit eine einwandfreie Abdichtung im Schließ- bzw. Bereitschaftszustand gewährleistet.

Nach einem Vorschlag der Erfindung, wird der Wasserteller an seiner Wasserseite mit einem zentralen Vorsprung versehen, der an seinem Ende einen radial nach außen sich erstreckenden Ringbund aufweist. Auf diesem Vorsprung ist, durch den Ringbund begrenzt, axial verschieblich ein Arretierring angeordnet, der an seiner Innenseite gegenüber dem Wassertellervorprsung und an seiner Außenseite gegenüber Gehäuse bzw. dem Sitzring abgedichtet ist. Die axiale Verschieblichkeit ist dabei so bemessen, daß das in der Bohrung, Nut oder dergleichen des Gehäuses bzw. Sitzrings angeordnete Verriegelungselement durch den Wasserteller in dessen einen Endlage blockiert und damit der Arretierring mechanisch gegen den Druck des Löschwassers in seiner Lage gehalten ist, das Verriegelungselement, beispielsweise eine Vielzahl von auf den Umfang vorzugsweise gleichmäßig verteilt angeordneten Kugeln oder dergleichen, vom Wasserteller jedoch freigegeben wird, wenn der auf den Vorsprung mit Ringbund wirkende Löschwasserdruck infolge eines auf der anderen Klappenseite absinkenden Gas- bzw. Luftdruckes in der Lage ist, den Wasserteller und damit auch die Luftklappe zu verschieben, bis der Ringbund am Arretierring zum Anschlag kommt. Nach seiner Freigabe wird das Verriegelungselement durch den unter Löschwasserdruck stehenden Arretierring aus der Nut herausgedrückt, so daß nunmehr das Absperrorgan durch das Löschwasser in seine Öffnungsstellung verstellt werden kann und dem Löschwasser den Weg zu den Sprinklern oder dergleichen freigibt.

Durch geeignete Bemessung der löschwasserseitigen Stirnfläche des Wassertellervorsprungs mit Ringbund einerseits und des Arretierrings andererseits in Verbindung mit dem vorhandenen Löschwasserdruck hat man es in einfacher Weise in der Hand, den erforderlichen Gas- bzw. Luftschließdruck auf die Luftklappe zu bestimmen, bzw. bei vorhandenem Gasschließdruck und Löschwasserdruck können in einfacher Weise die Flächenverhältnisse von Vorsprung mit Ringbund sowie Arretierung bestimmt werden, die erforderlich sind, um bei vollem vorhandenen Gasdruck das Absperrorgan gegen den Löschwasserdruck sicher geschlossen zu halten, bzw. die ergeben, wie groß der Gasdruckabfall sein muß, um das im Schadensfall gewünschte selbsttätige Öffnen des Absperrorgans zu bewirken.

Nach einem anderen Vorschlag sieht die Erfindung vor, zwischen Luftklappe und Wasserteller einen Ringraum zu bilden, der über eine oder mehrere Öffnungen in der Luftklappe mit der auf diese wirkenden Druckluft in Verbindung steht, und in einer einen luftklappenseitigen Vorsprung des Wassertellers umgebenden Ringnut eine Druckfeder anzuordnen, die von einem auf dem Vorsprung axial verschieblich angeordneten Ring abgedeckt ist. Der Wasserteller ist dabei als in Bereitschaftsstellung den lichten Querschnitt des Gehäuses bzw. Sitzrings völlig überspannende und abdichtende Platte ausgebildet, die in der Bereitschaftsstellung durch das Verriegelungselement mechanisch verriegelt ist. Aus Gründen einer einwandfreien Abdichtung ist dazu noch vorgesehen, den Ringraum nach dem Wasserteller zu mittels einer Membrane zu begrenzen.

Der besondere Vorteil dieser Anordnung und Ausbildung besteht darin, daß sie völlig unabhängig vom Löschwasserdruck arbeitet und man die Druckluft, den Ringraum und die Druckfeder jeweils in einfachster Weise in der erforderlichen bzw. zweckmäßigen Art aufeinander abstimmen kann. So könnte man beispielsweise unterschiedlichen Gas- bzw. Luftdrücken bei geometrisch unveränderter Ventilgestaltung allein durch den Austausch der Druckfeder gegen eine andere mit geeigneter Federcharakteristik Rechnung tragen.

Anstelle der Verwendung loser Verriegelungselemente wie Kugeln, Bolzen oder dergleichen, die ihrerseits mittels eines weiteren Elements in der Verriegelungsposition gehalten werden müssen und bei denen die Gefahr des Verlustes nach ihrer Entriegelung im Schadensfall besteht, bieten sich auch Lösungen an, bei denen sich mittels eines einzigen zentralen den lichten Querschnitt des Gehäuses bzw. Sitzrings überspannenden Verriegelungselements die gleiche vorteilhafte Gestaltung des Trockenalarmventils/Sprühflutventils gemäß der Erfindung realisieren läßt.

Dies wird zum Beispiel dadurch erreicht, daß gemäß der Erfindung die Luftklappe und der Wasserteller nicht zentral, sondern durch mehrere vorzugsweise gleichmäßig über den Umfang verteilten angeordnete Schrauben, Nieten oder dergleichen starr miteinander verbunden werden und das Verriegelungselement als zentral geführtes, den lichten Querschnitt des Gehäuses bzw. Sitzrings überspannendes, kegelförmiges Federelement, beispielsweise als Tellerfeder-ähnliche Ringscheibe oder dergleichen ausgebildet ist, das sich in der Bereitschaftsstellung in flachgedrücktem zustand mit seinem äußeren Rand bzw. seinen äußeren Enden in die Ringnut des Gehäuses bzw. Sitzrings erstreckt und dadurch den Wasserteller und damit das gesamte Absperrorgan mechanisch verriegelt, bis durch Absinken des Gas- bzw. Luftdrucks auch hier die Verriegelung aufgehoben wird und die Absperrklappe somit unter dem Löschwasserdruck selbsttätig öffnet. Auch hierbei besteht der wesentliche Vorteil, daß man völlig unabhängig vom Löschwasserdruck operieren und sich an die Gegebenheiten anpassen kann.

Die Erfindung ist in der Zeichnung in Ausführungsbeispielen gezeigt und wird anhand dieser im folgenden erläutert.

Es zeigen

Figur 1 in einem Axialschnitt ein Ventilgehäuse mit einer Absperrklappe, die über einen druckluftbeaufschlagten Ringraum und eine Druckfeder vom Löschwasserdruck unabhängig gesteuert wird,

Figur 1a in etwas größerem Maßstab im Schnitt und auseinander gezeichnet sowie in etwas abgewandelter Form, den Wasserteller sowie die dazugehörige Schließplatte und teilweise den Klappensitzring,

Figur 2 ebenfalls in einem Axialschnitt eine in Abhängigkeit vom Gas- bzw. Luftdruck und Löschwasserdruck gesteuerte Absperrklappe,

Figur 3 wiederum in einem Axialschnitt einen Klappensitzring mit vom Löschwasserdruck unabhängig gesteuerter Absperrklappe mit zentral geführtem Verriegelungselement,

Figur 3a in Draufsicht teilweise den Wasserteller der Figur 3,

Figur 3c in Draufsicht ein Ausführungsbeispiel für das Verriegelungselement der Figur 3 und

Figur 4 in einem Axialschnitt ein Ausführungsbeispiel für eine Absperrklappe für ein Sprühflutventil.

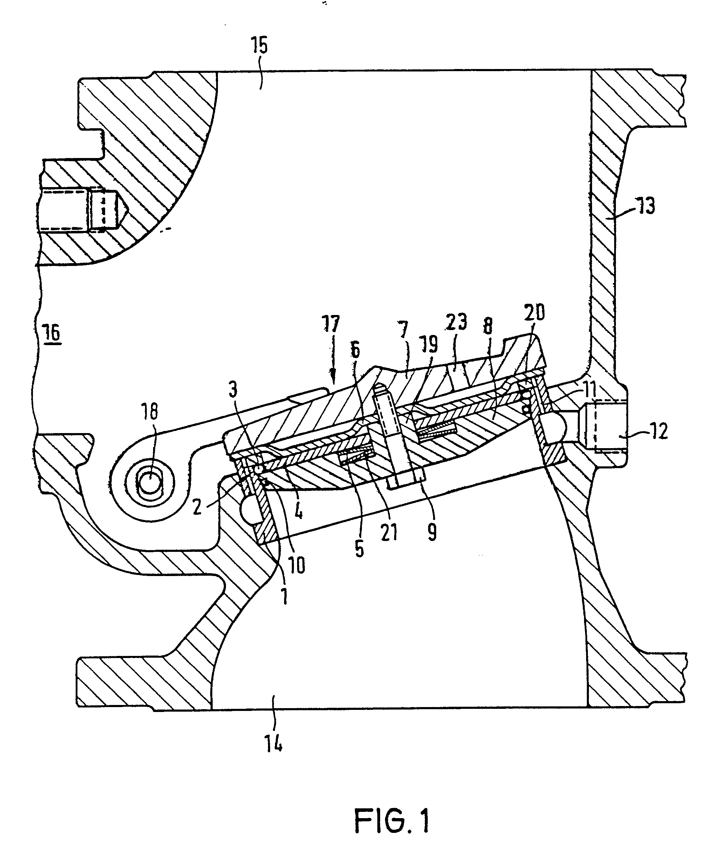

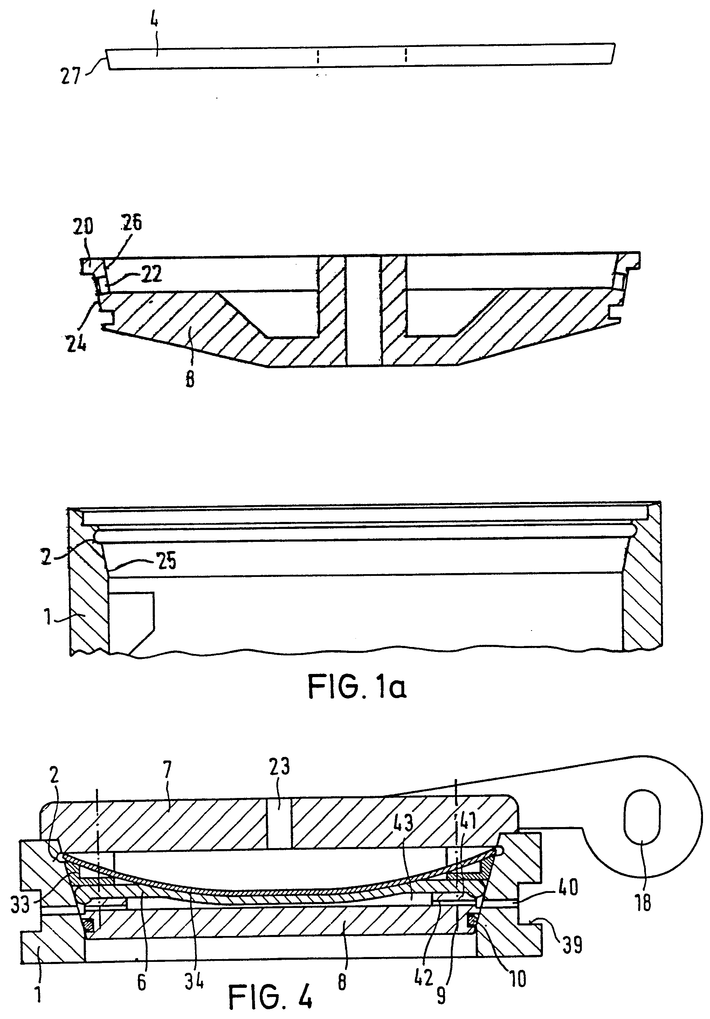

Nach Figur 1 ist im Gehäuse 13 mit Einlass 14, Auslass 15 und Handloch 16 der Klappensitzring 1 befestigt, der an seiner Innenseite die Ringnut 2 aufweist. Um den außerhalb des Strömungsweges angeordneten gehäusefesten Drehpunkt 18 verschwenkbar ist die Absperrklappe 17 angeordnet, die die Luftklappe 7 und den mit dieser über die Schraube 9 starr verbundenen Wasserteller 8 aufweist. Nach der Luftklappe zu ist am Wasserteller 8 der zentrale Vorsprung 19 und der Rand 20 sowie die den Vorsprung 19 umgebende Vertiefung 21 ausgebildet. Zwischen der Luftklappe 7 und dem Klappensitzring 1 sowie dem Rand 20 und Vorsprung 19 des Wassertellers 8 ist die Membran 6 angeordnet. Auf dem Vorsprung 19 ist - die Vertiefung 21 mit der Druckfeder 5 überdeckend - der als Schließplatte 4 dienende Teil des Wassertellers axial verschieblich angeordnet.

Das im Bereitschaftszustand gezeigte Ventil sei mit dem Einlass 14 über eine nicht gezeigte Rohrleitung an eine ebenfalls nicht gezeigte Löschmittelquelle und mit dem Auslass 15 über eine nicht gezeigte Rohrleitung an ein wiederum nicht gezeigtes Sprinklersystem oder dergleichen angeschlossen und schließlich sei das Handloch 16 mittels eines ebenfalls nicht gezeigten Deckels dicht verschlossen. Der Raum oberhalb der Absperrklappe 17 sei mit Druckluft gefüllt, die sowohl auf die Luftklappe 7 als auch durch die eine oder mehrere Bohrungen 23 in der Luftklappe hindurch über die Membran 6 auf die Schließplatte 4 drückt. Gegen die Kraft der Tellerfedern 5 wird dadurch die Schließplatte 4 auf den Wasserteller 8 gedrückt, wobei sie die über den Umfang verteilt angeordneten kugelförmigen Verriegelungselemente 3 in den Bohrungen 22 (Figur 1a) des Wassertellerrandes 20 bzw. in der Ringnut 2 des Klappensitzrings 1 hält. Der Wasserteller 8 ist dadurch mit dem Klappensitzring 1 verriegelt und kann dem unterhalb des Wassertellers anstehenden Druck des Löschwassers standhalten, wobei die am Umfang des Wassertellers 8 vorgesehene Dichtung 10 ein Hindurchtreten von Löschwasser verhindert.

Öffnet ein Sprinkler (oder mehrere), so entweicht über diesen Luft aus dem mit dem Auslass 15 des Ventilgehäuses 13 verbundenen Rohrnetz und damit auch aus dem oberen Teil des Ventils. Bei Abfall des Luftdrucks auf einen bestimmten Wert reicht die Kraft der Tellerfedern 5 aus, die Schließplatte 4 auf dem Vorsprung 19 nach oben zu verschieben. Die Anordnung ist dabei so getroffen, daß die Schließplatte 4 mindestens so weit verschoben wird, daß sie die Kugeln 3 völlig frei gibt, so daß diese aus der Ringnut 2 heraus- und in die Bohrungen 22 weiter hineingedrückt werden. Damit ist die Verriegelung aufgehoben und die Absperrklappe kann nun durch den Druck des Löschwassers um den Drehpunkt 18 aus dem Klappensitzring 1 herausgeschwenkt werden. Das Löschwasser strömt über das nicht gezeigte Rohrnetz nunmehr zu den Sprinklern und über den im Klappensitzring ausgebildeten Ringspalt oder dergleichen 11 und den Alarmanschluss 12 zu einem nicht gezeigten Alarmgeber.

Wie aus Figur 1a deutlich zu ersehen ist, sind die äussere konische Fläche 24 des Wassertellers 8 und die innere konische Fläche 25 des Klappensitzrings 1 sowie die innere konische Fläche 26 des Wassertellers 8 und die äußere konische Fläche 27 der Schließplatte 4 genau aufeinander abgestimmt und ist die Ringnut 2 im Klappensitzring 1 nur so tief ausgebildet, daß die Kugeln 3 nach Entriegelung durch Verschieben der Schließplatte 4 durch den Wasserteller 8 unter dem Druck des Löschwassers sicher und vollständig aus der Ringnut 2 heraus- und weiter in die Bohrungen 22 am Umfang des Wassertellerrandes hineingedrückt werden und somit ein einwandfreies Verschwenken der Absperrklappe gewährleistet ist.

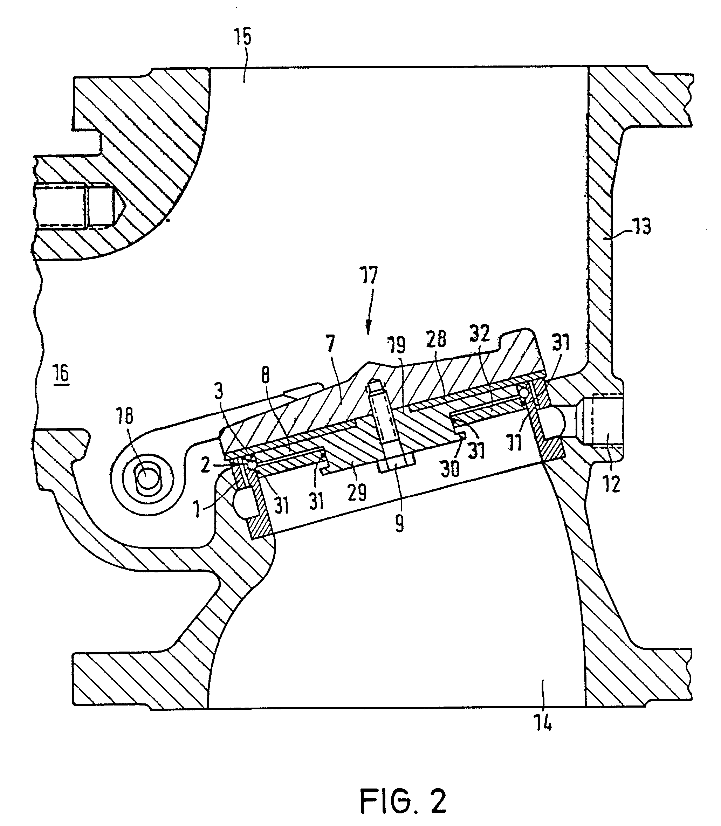

Beim Ausführungsbeispiel der Figur 2 sind die Luftklappe 7 und der Wasserteller 8 wiederum mittels der zentralen Schraube 9 starr miteinander verbunden. Luftklappenseitig weist der Wasserteller wieder den Vorsprung 19 auf. In dem dadurch zwischen der Luftklappe 7 und dem Wasserteller 8 gebildeten Ringspalt ist die Dichtung 28 angeordnet. Löschwasserseitig weist der Wasserteller 8 den zentralen Vorsprung 29 auf, der an seinem Ende mit dem Ringbund 30 versehen ist. Auf dem Vorsprung 29 ist der innen- und außenseitig mit den Dichtungen 31 ausgerüstete Arretierring 32 angeordnet.

Das luftklappenseitig wiederum an eine Luftdruckquelle und wassertellerseitig an eine Löschmittelquelle angeschlossene Ventil ist auch hier im Bereitschaftszustand gezeigt. Der auf die Luftklappe 7 wirkende Luftdruck ist auch hier niedriger als der auf den Wasserteller 8 wirkende Wasserdruck. Da für das Geschlossenhalten bzw. das Öffnen der Absperrklappe hier aber nur die Stirnfläche des Vorsprungs 29 mit Ringbund 30 wirksam ist, da die auf den Arretierring 32 wirkende Kraft durch die mechanische Verriegelung mittels der Kugeln und dem Wasserteller 8 neutralisiert ist, diese Stirnfläche des Vorsprungs aber erheblich kleiner ist als die Fläche des Luftklappentellers 7, überwiegt die in Schließeinrichtung der Absperrklappe wirkende Kraft. Erst wenn nach Öffnen eines oder mehrerer Sprinkler luftklappenseitig ein Druckabfall bestimmter Größe eintritt, überwiegt die auf den Vorsprung 19 wirkende Kraft und bewirkt ein Verschieben des Wassertellers 8 bzw. Verschwenken der Absperrklappe im Sinne einer Öffnungsbewegung. Dabei werden die Kugeln 3 freigegeben, so daß diese aus der Ringnut bzw. -rille 2 heraustreten können, dabei den Arretierring 32 freigeben, so daß dieser unter dem Druck des Löschwassers, und auch durch den Ringbund 30 mitgenommen, mit den übrigen Teilen der Absperrklappe in Öffnungsstellung verschwenkt wird und den Durchgang für das Löschwasser freigibt, wobei über den Ringspalt 11 und den Alarmanschluss 12 wieder ein nicht gezeigter Alarmgeber betätigt wird.

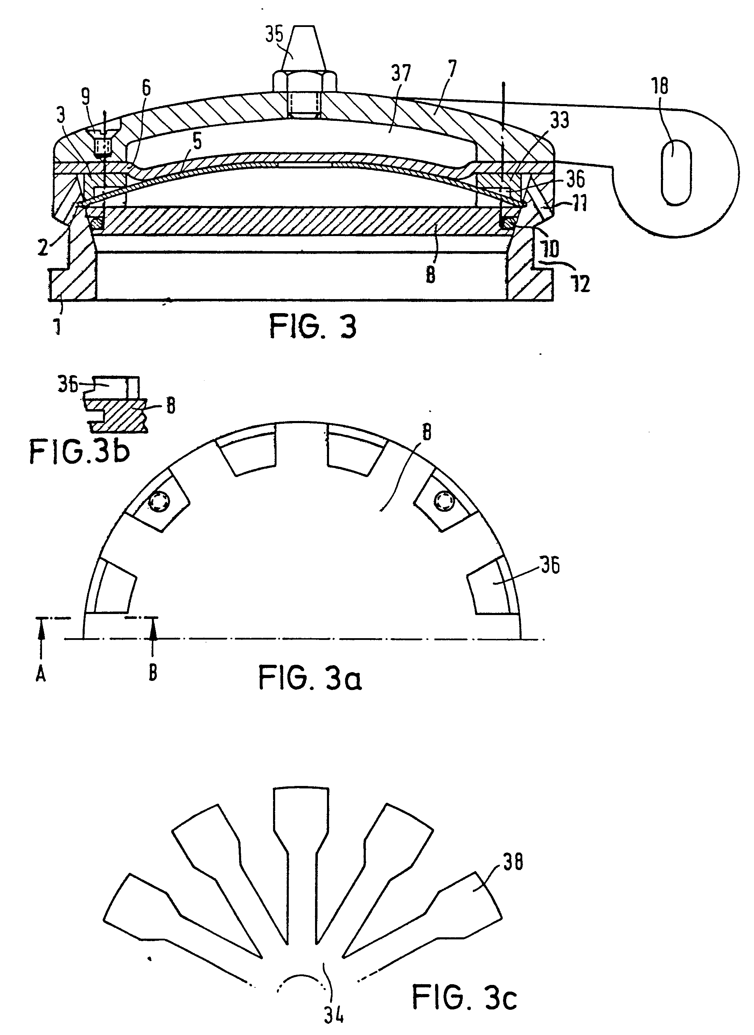

Bei der Ausführung gemäß Figur 3 sind die Luftklappe 7 und der Wasserteller 8 mittels längs des Umfangs gleichmäßig verteilt angeordneter Schrauben 9 starr miteinander verbunden. Zwischen der Luftklappe 7 und dem Wasserteller 8 ist die Membran 6 unter Zuhilfenahme des Membranhalterings 33 angeordnet, der sich wie aus den Figuren 3a und 3b zu ersehen, auf den am Umfang des Wassertellers 8 in gleichmäßigen Abständen ausgebildeten Nocken 36 abstützt. Zwischen der Membran 6 und dem Wasserteller 8 ist, mittels nicht gezeigter Teile geführt, das in Figur 3c deutlicher gezeigte sternförmig ausgebildete Federelement 34 vorgesehen. Die Luftklappe 7 weist den zentral angeordneten Filterstopfen 35 aus Sintermetall auf und der Klappensitzring 1 den Ringspalt bzw. die Bohrungen 11 und den Alarmanschluss 12.

Die Absperrklappe ist im Zustand vor der Inbetriebnahme gezeigt. Bei der Inbetriebnahme wird das nicht gezeigte Rohrnetz oberhalb der Luftklappe 7 mit Druckluft gefüllt. Die Druckluft dringt über den Sintermetallstopfen 35 in den Raum 37 oberhalb der Membran 6 ein. Durch den Druck der Luft drückt die Membran 6 das sternförmige Federelement 34 nach unten, bis dieses flach auf dem Wasserteller 8 aufliegt, wobei sich die Enden 38 (Figur 3c) in die Ringnut 2 des Klappensitzrings schieben und dabei den Wasserteller 8 mechanisch mit dem Klappensitzring 1 verriegeln. Unterhalb des mittels der Dichtung 10 gegenüber dem Klappensitzring 1 abgedichteten Wassertellers 8 kann nun der Löschwasserdruck aufgegeben werden, so daß sich nunmehr das Ventil im Bereitschaftszustand befindet.

Öffnet ein oder mehrere Sprinkler, fällt der Luftdruck oberhalb der Membran ab. Das Federelement 34 wölbt sich nach oben durch, wodurch sich die Enden 38 aus der Rinnut 2 herausbewegen, so daß die Verriegelung aufgehoben ist und die Absperrklappe durch den Druck des Löschwassers geöffnet wird und das Löschwasser in das Sprinklerrohrnetz strömt und über die Bohrungen 11 und den Alarmanschluss 12 zu einem nicht gezeigten Alarmgeber gelangt.

Sofern eine Schnellöffnung des Ventils beabsichtigt sein sollte, kann eine Druckluftquelle an den Alarmanschluss 12 angeschlossen werden. Durch Einströmen der Druckluft über die Bohrungen 11 unter die Membran 6 wird deren Schließkraft aufgehoben und das Ventil öffnet. Eine Schnellöffnung ist selbstverständlich auch bei den Ausführungsbeispielen der Figur 1 und 2 möglich.

Bei der in Figur 4 gezeigten Absperrklappe mit Klappensitzring handelt es sich um eine Ausführungsform für ein, Sprühflutventil wie es in Sprühwasserlöschanlagen eingesetzt wird. Bei diesen steht das Löschmittel bis zum Sprühflutventil an, hinter diesem ist das Rohrnetz mit offenen Löschdüsen bestückt und im Bereitschaftszustand mit atmosphärischer Luft gefüllt.

Gezeigt ist der Augenblick, in dem die Absperrklappe gerade entriegelt aber durch das Löschmittel noch nicht aufgedrückt ist. Über dem Wasserteller 8 mit Dichtung Io ist die Membran 6 und über dieser das beispielsweise wiederum sternförmig ausgebildete Federelement 34 angeordnet. Oberhalb der Luftklappe 7 bzw. über die Bohrung 23 auch im Raum unterhalb der Luftklappe, aber oberhalb der Membran 6, herrscht atmosphärischer Druck. Der Klappensitzring 1 ist mit der Ringnut 39 und den Bohrungen 40 und der erhabene Rand 41 des Wassertellers 8 mit den Bohrungen 42 für die Zufuhr der Steuerluft in den Raum 43 zwischen dem Wasserteller 8 und der Membran 6 versehen. In verriegeltem Zustand ist das Federelement 34 durch den auf die Membran wirkenden Druck der Steuerluft flachgedrückt, wobei die Enden des Federelements 34 in die Ringnut 2 eingreifen und somit die mechanische Verriegelung der Absperrklappe bewirken.

Sprühwasserlöschanlagen werden dort eingesetzt, wo ein ganzer Abschnitt gleichzeitig über die offenen Löschdüsen mit Löschwasser versorgt werden muß. In diesem Abschnitt kann sich ein Anregernetz befinden, das mit Druckluft oder Wasser gefüllt ist. In dem Anregerrohrnetz befinden sich Anreger (Sprinkler). Öffnet einer dieser Anreger oder auch mehrere, so fällt der Druck im Anregerrohrnetz und und damit auch im Anschluss für die Steuerluft sowie im Raum 43 ab. Das unter Vorspannung stehende flachgedrückte Federelement 34 kann sich dadurch entspannen und die in Figur 4 gezeigte Lage einnehmen, wobei die Enden des Federelements 34 aus der Ringnut 2 herausgleiten und somit die mechanische Verriegelung aufgehoben ist. Der am Wasserteller 8 anstehende Wasserdruck kann nunmehr das Öffnen der Absperrklappe und damit die Freigabe des Strömungsweges in das Rohrnetz mit den offenen Löschdüsen bewirken.

Feuerlöschentile werden, wie in der Zeichnung dargestellt, vorzugsweise vertikal angeordnet, jedoch sind auch horizontale Anordnungen sowie Eckventile bekannt. Die erfindungsgemäße Ausbildung ist selbstverständlich auch bei diesen mit den gleichen Vorteilen anwendbar. Bevorzugt werden die Ventile mit kreisrundem Querschnitt ausgebildet, es ist jedoch denkbar, die Erfindung auch bei Ventilen anzuwenden, deren Querschnitt etwa oval oder anders geformt ist.

Bei den hier in Betracht kommenden Absperrelementen handelt es sich selbstverständlich nicht nur um solche, die - wie in den Figuren der Zeichnung dargestellt - als um einen außerhalb des Strömungsweges befindlichen Gehäuse-festen Drehpunkt verschwenkbare Absperrklappen ausgebildet sind, sondern beispielsweise auch um solche, die sich etwa um einen innerhalb des Strömungsweges befindlichen Punkt verdrehen bzw. verschwenken lassen, oder auch um solche, die parallel vom Sitz abheben. Ebenso liegt es im Rahmen der Erfindung, anstelle eines den gesamten lichten Gehäusequerschnitt überspannenden einzigen Absperrelementes ein sich aus zwei oder mehreren verdreh- bzw. verschwenkbaren oder auch parallel abhebenden gemeinsam miteinander den Gehäusequerschnitt versperrenden Teilen zusammensetzendes Absperrorgan vorzusehen.

Die hier gezeigten Ausführungen der Verriegelungselemente als Kugeln und sternförmige Federelemente sind nur beispielhaft, selbstverständlich sind auch andere Ausführungsformen denkbar, wie z. B. kurze zylindrische an ihren beiden Enden kugelig abgerundete Stifte oder dergleichen oder zum Beispiel am Umfang eingekerbte Tellerfedern. In gleicher Weise kann aber auch anstelle der zur Erzeugung bzw. Übertragung der Verriegelungskraft dargestellten Membran auch eine andere Lösung vorgesehen werden, beispielsweise die Verwendung eines Kolbens mit Zylinder. Schließlich versteht es sich aber auch von selbst, daß für das Ventil bzw. dessen Einzelteile Materialien verwendet werden, die der jeweiligen Funktion des Einzelteils gerecht werden und insbesondere sicherstellen, daß das Ventil auch über längere Zeit hinweg stets einsatzbereit und funktionstüchtig bleibt.

**Patentansprüche**

1. Trockenalarmventil/Sprühflutventil für ortsfest angeordnete Feuerlöschanlagen, insbesondere Sprinkleranlagen, mit in einem Ventilgehäuse (13) mit Einlass (14) und Auslass (15) angeordnetem, in Schließstellung den lichten Querschnitt des Gehäuses (13) dicht verschließendem Absperrelement (17), z. B. Klappe oder Teller, mit in dieses integrierter Verriegelungs- und Auslöseeinrichtung dadurch gekennzeichnet, daß wenigstens ein in eine am innerem Umfang des Sitzes de Absperrelementes (17) im Gehäuse (13) oder in einem in dieses eingesetzten Sitzring (1) ausgebildete Bohrung, Nut oder dergleichen (2) eingreifendes Verriegelungselement (3, 34) das Absperrelement (17) gegen den auf dieses wirkenden maximal möglichen Druck einer durch Flüssigkeit, vorzugsweise Wasser, mechanisch in seiner Schließstellung verriegelt, solange ein mittelbar oder unmittelbar auf das Verriegelungselement wirkender Druck eines Gases oder Gasgemisches, insbesondere Luft, einen vorgegebenen Wert nicht unterschreitet, wobei der Schließdruck des Gases bzw. Gasgemisches geringer, vorzugsweise erheblich geringer ist, als der Druck der Löschflüssigkeit.

2. Trockenalarmventil/Sprühflutventil nach Anspruch 1, dadurch gekennzeichnet, daß das Absperrelement (17) zwei miteinander starr verbundene scheibenförmige Elemente aufweist, von denen in Schließstellung des Absperrelementes das als Luftklappe (7) dienende eine Element die dem Auslaß zugewandte Stirnfläche des Sitzes des Absperrelementes im Gehäuse (13) oder des in dieses eingesetzten Sitzrings (1) längs dessen gesamten Umfangs zumindest teilweise übergreift, das als Wasserteller (8) dienende andere Element sich innerhalb des Gehäuses (13) bzw. Sitzrings (1) und auf der dem Auslaß (15) zugewandten Seite der Luftklappe befindet, und dessen lichten Querschnitt im wesentlichen völlig überspannt.

3. Trockenalarmventil/Sprühflutventil nach Anspruch 2, dadurch gekennzeichnet, daß die Luftklappe (7) und der Wasserteller (8) durch eine zentrale Schraube (9) miteinander verbunden sind.

4. Trockenalarmventil/Sprühflutventil nach Anspruch 2 oder 3, dadurch gekennzeichnet, daß der Wasserteller (8) an seiner luftklappenseitigen Stirnfläche einen zentralen Vorsprung (19) aufweist und in dem dadurch zwischen Luftklappe (7) und Wasserteller (8) gebildeten Ringspalt ein diesen ausfüllender Dichtungsring (28) angeordnet ist, dessen Außenkonturen zumindest angenähert mit denjenigen der Luftklappe (7) übereinstimmen.

5. Trockenalarmventil/Sprühflutventil nach einem der Ansprüche 2 bis 4, dadurch gekennzeichnet, daß der Wasserteller (8) an seiner von der Luftklappe (7) abgewandten Stirnfläche einen zentralen Vorsprung (29) aufweist, der an seinem Ende durch einen in Umfangsrichtung sich erstreckenden nach außen überstehenden Ringbund (30) begrenzt ist, und daß auf diesem Vorsprung ein längs seines inneren Umfangs gegenüber dem Vorsprung und längs seines äußeren Umfangs gegenüber dem Gehäuse bzw. dem Sitzring (1) abgedichteter Arretierring (32) axial verschieblich angeordnet ist, wobei die axiale Erstreckung des Vorsprungs so bemessen ist, daß in der einen Endstellung des Wassertellers (8) dieser das Verriegelungselement (3) in seiner Lage blockiert, in der anderen Endstellung dagegen freigibt.

6. Trockenalarmventil/Sprühflutventil nach Anspruch 2 oder 3, dadurch gekennzeichnet, daß der eine Teil des Wassertellers (8) an seiner luftklappenseitigen Stirnfläche einen zentralen Vorsprung (19) und eine diesen umgebende ringförmige Vertiefung (21) aufweist, daß auf diesem zentralen Vorsprung der andere als Schließplatte (4) dienende Teil des Wassertellers (8) axial verschieblich abgeordnet und in der ringförmigen Vertiefung (21) eine Druckfeder (5) vorgesehen ist, und daß der zentrale Vorsprung (19) und der Rand (20) des einen Teils des Wassertellers und/oder das Gehäuse bzw. der Sitzring (1) zusammen mit den einander benachbarten Flächen des anderen Teils des Wassertellers (8) und der Luftklappe (7) einen Ringraum bildet und dieser mit dem luftklappenseitigen Gehäuseteil über wenigstens eine in der Luftklappe (7) ausgebildete Durchbohrung, Durchbrechung oder dergleichen (23) in Verbindung steht.

7. Trockenalarmventil/Sprühflutventil nach Anspruch 6, dadurch gekennzeichnet, daß zwischen Luftklappe (7) und Wasserteller (8) eine im wesentlichen den flächigen Abmessungen der Luftklappe entsprechende Membran (6) angeordnet ist.

8. Trockenalarmventil/Sprühflutventil nach einem der Ansprüche 1 bis 7, dadurch gekennzeichnet, daß das Verriegelungselement als Kugel (3) ausgebildet ist.

9. Trockenalarmventil/Sprühflutventil nach Anspruch 2, dadurch gekennzeichnet, daß die Luftklappe (7) und der Wasserteller (8) durch mehrere längs ihres Umfanges angeordnete Elemente, beispielsweise Schrauben, Nieten oder dergleichen (9) starr miteinander verbunden sind.

10. Trockenalarmventil/Sprühflutventil nach Anspruch 9, dadurch gekennzeichnet, daß das Verriegelungselement zwischen Luftklappe (7) und Wasserteller (8) angeordnet und als zentral geführtes kegelförmiges Federelement (34) ausgebildet ist, das in entlastetem kegelförmigen Zustand außer Eingriff mit der Ringnut (2) des Gehäuses bzw. Sitzrings (2) ist, in belastetem flachgedrücktem Zustand jedoch mit der Ringnut (2) des Gehäuses bzw. Sitzrings (1) längs ihres Umfanges in Eingriff steht.

11. Trockenalarmventil/Sprühflutventil nach Anspruch 10, dadurch gekennzeichnet, daß das Federelement (34) als sternförmige geschlitzte Scheibe ausgebildet ist.

12. Trockenalarmventil/Sprühflutventil nach einem der Ansprüche 1 bis 11, dadurch gekennzeichnet, daß das Gehäuseinnere über eine oder mehrere in der Schließstellung des Absperrorgans (17) durch dieses verschlossene Bohrungen, Öffnungen oder dergleichen (11) im Gehäuse bzw. Sitzring (1) und einen Alarmanschluss (12) im Gehäuse (13) an einen Alarmgeber angeschlossen ist.

13. Sprühflutventil nach einem der Ansprüche 9 bis 11, dadurch gekennzeichnet, daß zwischen der Luftklappe (7) und dem Wasserteller (8), gegebenenfalls über längs des Umfangs von Luftklappe bzw. Wasserteller ausgebildete axiale Vorsprünge oder dergleichen (41) und einen sich darauf abstützenden Dichtungs- und Haltering (33), luftklappen- oder wassertellerseitig des Verriegelungsorgans eine den lichten Querschnitt des Gehäuses bzw. Sitzrings (1) überspannende Membran (6) befestigt ist, und daß der zwischen Membran (6) und Absperrorgan vorhandene Raum an eine Druckgas-, insbesondere Druckluftquelle, und der zwischen Verriegelungsorgan und Absperrorgan vorhandene Raum an die Atmosphäre angeschlossen ist.

**Claims**

1. Dry alarm valve/spray flood valve for fixedly arranged fire-extinguishing installations, in particular sprinkler installations, having a shut-off element (17), e.g. flap or plate, which is arranged in a valve housing (13) with an inlet (14) and an outlet (15), which, in its closed position, tightly seals the inside cross-section of the housing (13) and which has a locking and release arrangement integrated therein, characterised in that at least one locking element (3, 34), engaging in a bore, groove or the like (2) formed on the inner circumference of the seat of the shut-off element (17) in the housing (13) or in a seating ring (1) inserted therein, locks the shut-off element (17) against the maximum possible pressure of a fluid, preferably water, acting thereon, mechanically in its closed position, as long as the pressure of a gas or gas mixture, in particular air, acting indirectly or directly on the locking element, does not fall below a predetermined value, whereby the closing pressure of the gas or respectively gas mixture is less, preferably considerably less, than the pressure of the extinguishing fluid.

2. Dry alarm valve/spray flood valve according to Claim 1, characterised in that the shut-off element (17) has two disc-shaped elements connected rigidly with each other, of which, in the closed position of the shut-off element, the one element serving as an air flap (7) at least partially overlaps the face of the seat of the shut-off element in the housing (13), which face faces the outlet, or of the seat ring (1) inserted therein, along its entire circumference, the other element serving as a water plate (8) is situated inside the housing (13) or seat ring (1) and on the side of the air flap facing the outlet (15), and substantially completely spans its inside cross-section.

3. Dry alarm valve/spray flood valve according to Claim 2, characterised in that the air flap (7) and the water plate (8) are connected with each other by a central screw (9).

4. Dry alarm valve/spray flood valve according to Claim 2 or 3, characterised in that on its face on the air flap side the water plate (8) has a central projection (19) and in the ring slot thereby formed between the air flap (7) and the water plate (8) there is arranged a sealing ring (28) which fills the gap, the outer contours of the ring coinciding at least approximately with those of the air flap (7).

5. Dry alarm valve/spray flood valve according to one of Claims 2 to 4, characterised in that on its face facing away from the air flap (7) the water plate (8) has a central protection (29) which is delimited at its end by an outwardly protruding annular collar (30) extending in the circumferential direction, and that on this projection a stop ring (32) is arranged so as to be axially slidable, which stop ring is sealed along its inner circumference with respect to the projection and along its outer circumference with respect to the housing or respectively to the seating ring (1), the axial extent of the projection being dimensioned such that in the one end position of the water plate (8) the latter blocks the locking element (3) in its position, and in the other end position, however, it releases it.

6. Dry alarm valve/spray flood valve according to Claim 2 or 3, characterised in that the one part of the water plate (8) has on its face on the air flap side a central projection (19) and an annular depression (21) surrounding the latter, that on this central projection the other part of the water plate (8), serving as closure plate (4) is arranged so as to be axially slidable and in the annular depression (21) a pressure spring (5) is provided, and that the central projection (19) and the edge (20) of the one part of the water plate and/or the housing or respectively the seating ring (1) together with the surfaces of the other part of the water plate (8) which are adjacent to each other, and with the air flap (7), form an annulus and the latter communicates with the housing part on the air flap side via at least one bore, perforation or the like (23) formed in the air flap (7).

7. Dry alarm valve/spray flood valve according to Claim 6, characterised in that between the air flap (7) and the water plate (8) a membrane (6) is arranged which corresponds substantially to the areal dimensions of the air flap.

8. Dry alarm valve/spray flood valve according to one of Claims 1 to 7, characterised in that the locking element is constructed as a ball (3).

9. Dry alarm valve/spray flood valve according to Claim 2, characterised in that the air flap (7) and the water plate (8) are connected rigidly with each other through several elements arranged along their circumference, for example screws, rivets or the like (9).

10. Dry alarm valve/spray flood valve according to Claim 9, characterised in that the locking element is arranged between the air flap (7) and the water plate (8) and is constructed as a centrally guided dished spring element (34), which in its relieved dished state is out of engagement with the annular groove (2) of the housing or respectively of the seat ring (2), but in its loaded flattened state, however, is in engagement with the annular groove (2) of the housing or respectively of the seat ring (1) along its circumference.

11. Dry alarm valve/spray flood valve according to Claim 10, characterised in that the spring element (34) is constructed as a star-shaped slotted disc.

12. Dry alarm valve/spray flood valve according to one of Claims 1 to 11, characterised in that the interior of the housing is connected to an alarm emitter via one or more bores, openings or the like (11) in the housing or respectively seat ring (1) which in the closed position of the shut-off member (17) are closed by the latter, and via an alarm connection (12) in the housing (13).

13. Spray flood valve according to one of Claims 9 to 11, characterised in that between the air flap (7) and the water plate (8), if required via axial projections or the like (41) formed along the circumference of the air flap or respectively water plate and via a sealing and holding ring (33) supported thereon, on the air flap or water plate side of the locking member a membrane (6) is attached, spanning the inside cross-section of the housing or respectively of the seat ring (1), and that the space between the membrane (6) and the shut-off member is connected to a source of pressure gas, in particular compressed air, and the space between the locking member and the shut-off member is connected to the atmosphere.

## Revendications

1. Soupape d'alarme à conduite sèche/soupape de commande d'arrosage en douche pour installations d'extinction d'incendie situées à poste fixe, en particulier pour installations à têtes d'extinction, comportant, placé dans un bâti de soupape (13) possédant une entrée (14) et une sortie (15), un élément d'arrêt (17) par exemple un clapet ou un plateau, obturant hermétiquement en position de fermeture la section transversale libre du bâti (13) et comportant dans cet élément d'arrêt un dispositif intégré de verrouillage et de déclenchement, caractérisée en ce qu'au minimum un élément de verrouillage (3, 34), en prise dans un alésage, une rainure ou équivalent (2), formé sur le périmètre interne du siège de l'élément d'arrêt (17) dans le bâti (13) ou dans une bague d'appui (1) introduite dans celui-ci, verrouille mécaniquement dans sa position de fermeture l'élément d'arrêt (17) contre la pression maximale, pouvant agir sur celui-ci, d'un liquide, de l'eau de préférence, aussi longtemps qu'une pression, agissant directement ou indirectement sur l'élément de verrouillage, d'un gaz ou d'un mélange gazeux, de l'air en particulier, n'est pas inférieure à une valeur prédéfinie, la pression de fermeture du gaz ou du mélange gazeux étant plus faible, notablement plus faible de préférence, que la pression du liquide d'extinction.

2. Soupape d'alarme à conduite sèche/soupape de commande d'arrosage en douche selon la revendication 1, caractérisée en ce que l'élément d'arrêt (17) présente deux éléments en forme de disque relies rigidement l'un à l'autre, dont, en position de fermeture de l'élément d'arrêt, l'un sert de clapet d'air (7) et recouvre au moins partiellement la surface frontale, tournée vers la sortie, le long de tout le périmètre, du siège de l'élément d'arrêt dans le bâti (13) ou de la bague d'appui (1) introduite dans celui-ci, et l'autre sert de plateau d'eau (8), se trouve à l'intérieur du bâti (13) ou de la bague d'appui (1) et du côté, tourné vers la sortie (15), du clapet d'air et recouvre entièrement pour l'essentiel la section transversale libre du bâti.

3. Soupape d'alarme à conduite sèche/soupape de commande d'arrosage en douche selon la revendication 2, caractérisée en ce que le clapet d'air (7) et le plateau d'eau (8) sont reliés l'un à l'autre par une vis centrale (9).

4. Soupape d'alarme à conduite sèche/soupape de commande d'arrosage en douche selon la revendication 2 ou 3, caractérisée en ce que le plateau d'eau (8) présente, à sa surface frontale du côté du clapet d'air, une partie centrale en saillie (19) et en ce que dans le passage annulaire, formé de ce fait entre le clapet d'air (7) et le plateau d'eau (8), est placé un anneau d'étanchéité (28) le remplissant et dont les contours extérieurs coïncident approximativement au moins avec ceux du clapet d'air (7).

5. Soupape d'alarme à conduite sèche/soupape de commande d'arrosage en douche selon l'une des revendications 2 à 4, caractérisée en ce que le plateau d'eau (8) présente, à sa surface frontale orientée à l'opposé du clapet d'air (7), une partie centrale en saillie (29) qui est limitée à son extrémité par une collerette circulaire (30) s'étendant dans la direction périphérique et dépassant vers l'extérieur, et en ce que sur cette partie en saillie est placé, mobile axialement, un anneau d'arrêt (32) rendu étanche le long de son périmètre, intérieur vis-à-vis de la partie em saillie et, le long de son périmètre extérieur, vis-à-vis du bâti ou de la bague d'appui (1), la longueur axiale de la partie en saillie étant dimensionnée de telle sorte que celle-ci, dans une position extrême du plateau d'eau (8), bloque l'élément de verrouillage (3) dams sa position et, dans l'autre position extrême em revanche, le libère.

6. Soupape d'alarme à conduite sèche/soupape de commande d'arrosage en douche selon la revendication 2 ou 3, caractérisée en ce qu'une partie du plateau d'eau (8), à sa surface frontale du côté du clapet d'air, présente une partie centrale en saillie (19) et un évidement annulaire (21) entourant celle-ci, en ce qu'à cette partie centrale en saillie est rattachée, mobile axialement, l'autre partie du plateau d'eau (8) servant de plaque de fermeture (4) et un ressort de pression (5) est prévu dans l'évidement annulaire (21) et en ce que la partie centrale en saillie (19) et le bord (20) d'une partie du plateau d'eau et/ou le bâti ou la bague d'appui (1) forment ensemble avec les surfaces, voisines l'une de l'autre, de l'autre partie du plateau d'eau (8) et du clapet d'air (7) un espace annulaire qui est en communication avec la partie du côté du clapet d'air par au minimum une perforation, une découpe ou équivalent (23) formée dans le clapet d'air (7).

7. Soupape d'alarme à conduite sèche/soupape de commande d'arrosage en douche selon la revendication 6, caractérisée en ce qu'entre le clapet d'air (7) et le plateau d'eau (8) est placée une membrane (6) correspondant sensiblement aux dimensions planes du clapet d'air.

8. Soupape d'alarme à conduite sèche/soupape de commande d'arrosage en douche selon l'une des revendications 1 à 7, caractérisée en ce que l'élément de verrouillage est constitué comme une bille (3).

9. Soupape d'alarme à conduite sèche/soupape de commande d'arrosage en douche selon la revendication 2, caractérisée en ce que le clapet d'air (7) et le plateau d'eau (8) sont reliés rigidement l'un à l'autre par plusieurs éléments, par exemple des vis, des rivets ou équivalents (9) placés le long du périmètre du clapet d'air.

10. Soupape d'alarme à conduite sèche/soupape de commande d'arrosage en douche selon la revendication 9, caractérisée en ce que l'élément de verrouillage, placé entre le clapet d'air (7) et le plateau d'eau (8), est formé comme un élément conique à ressort (34) guidé centralement, lequel, dans l'état conique déchargé, n'est pas en prise avec la rainure annulaire (2) du bâti ou de la bague d'appui (2), mais dans l'état chargé et aplati, est en prise avec la rainure annulaire (2) du bâti ou de la bague d'appui (1), le long du périmètre de cette rainure.

11. Soupape d'alarme à conduite sèche/soupape de commande d'arrosage en douche selon la revendication 10, caractérisée en ce que l'élément à ressort (34) est constitué comme un disque entaillé en forme d'étoile.

12. Soupape d'alarme à conduite sèche/soupape de commande d'arrosage en douche selon l'une des revendications 1 à 11, caractérisée en ce que l'intérieur du bâti est raccordé à un émetteur d'alarme par l'intermédiaire d'un ou de plusieurs alésages, ouvertures ou équivalents (11) qui, en position de fermeture de l'élément d'arrêt (17), sont fermés par celui-ci, dans le bâti ou la bague d'appui (1) et, par un raccord d'alarme (12), dans le bâti (13).

13. Soupape de commande d'arrosage en douche selon l'une des revendications 9 à 11, caractérisée en ce qu'entre le clapet d'air (7) et le plateau d'eau (8), éventuellement sur des épaulements axiaux ou équivalents (41) formés le long du périmètre du clapet d'air ou du plateau d'eau et sur une bague d'étanchéité et de retenue (33), s'y appuyant, de l'organe de verrouillage du côté du clapet d'air ou du plateau d'eau, est fixée une membrane (6) recouvrant la section transversale libre du bâti ou de la bague d'appui (1), et en ce que l'espace existant entre la membrane (6) et l'organe d'arrêt est raccordé à une source de gaz comprimé, en particulier une source d'air comprimé, et l'espace existant entre l'organe de verrouillage et l'organe d'arrêt est relié à l'amosphère.

**FIG. 1**

FIG. 1a

FIG. 4

3

FIG. 2

0 103 105

FIG. 3

FIG.3b

FIG. 3a

FIG. 3c

7